# EUROPÄISCHE PATENTANMELDUNG

(11) **EP 0 591 602 A1**
(43) Veröffentlichungstag der Anmeldung: **13.04.1994**
(21) Anmeldenummer: 92890213.9
(22) Anmeldetag: 06.10.1992
(51) Int. Cl.: E06B 7/10, E04B 2/96, E04F 17/04, F24F 5/00

(54) **Einrichtung zur Konditionierung von Innenraumzonen**

(71) Anmelder: GÖTZ ENTWICKLUNGS- UND LIZENZ GMBH, D-94469 Deggendorf (DE)
(72) Erfinder: Jordan, Paul Dipl.Ing., W-7750 Konstanz (DE); Rothkamm, Horst, W-8360 Deggendorf (DE)
(74) Vertreter: Hübscher, Heiner, Dipl.-Ing.

(57) **Zusammenfassung**

Für eine Einrichtung zur Konditionierung von Innenraumzonen, insbesondere zur Be- und Entlüftung von Innenraumzonen, insbesondere zur Anwendung bei zwischen einer Raumabschlußwand eines Wand- und/oder Dachbereichs eines Gebäudes und einer im Abstand und parallel dazu aus Einzelplatten, insbesondere Glasscheiben, zusammengesetzten Wetterschutz-Schichtebene verbleibenden Hinterlüftungs-Zwischenräumen, wobei die Einzelplatten über an der Raumabschlußwand fixierte Profitpfosten aneinander gefügt sind, wird vorgeschlagen, die Profilpfosten (100) so auszubilden, daß zwischen der Innen- und Außenseite der Einzelplatten (Glasscheiben 104) eine insbesondere steuerbare Luftzirkulation (Pfeile X, Y) möglich ist.

Damit wird eine definierte Konditionierung von Innenraumzonen oder dergleichen möglich, und zwar auch für den Fall, daß die Wetterschutz-Schichtebene geneigt angeordnet ist.

## Beschreibung

Die vorliegende Erfindung bezieht sich auf eine Einrichtung zur Konditionierung von Innenraumzonen und dergleichen Zwischenräumen nach dem Oberbegriff des Patentanspruchs 1.

Bekannt sind form- und materialunabhängige sogenannte Gebäudehüllen-Systeme, bei denen eine der funktionellen Schichtebene, d.h. der Raumabschlußwand gegenüber vorgehängte Wetterschutz-Schichtebene vorgesehen ist. Diese Wetterschutz-Schichtebene besteht im allgemeinen aus einer der Größe der Raumabschlußwand entsprechenden Anzahl neben- und/oder übereinander angeordneter Glasscheiben, deren im wesentlichen geschlossene Front als Regenschutz beziehungsweise als Beschattungswand dient. Um u. a. der thermischen Ausdehnung der Glasscheiben gerecht zu werden und um den zwischen der Raumabschlußwand und der Wetterschutz-Schichtebene verbleibenden Hinterlüftungs-Zwischenraum zu belüften, sind die übereinander angeordneten Glasscheiben jeweils mit offenen Fugen im Abstand von 6 bis 8 mm zueinander fixiert. Diese Konstruktion ist jedoch dann nicht mehr anwendbar, wenn zum Beispiel hohe Anforderungen an die Schalldämmung bestehen oder/und wenn zum Beispiel die Wetterschutz-Schichtebene geneigt angeordnet ist oder in Verbindung mit schrägen Dächern realisiert werden soll; in diesen fällen dringt bei Regen Wasser ein und gelangt in die Zonen der Abschlußwand, was gegebenenfalls zu Störungen führt. Darüberhinaus erfolgt bei den bekannten Systemen der Luftaustausch zwischen dem Hinterlüftungs-Zwischenraum und der Wetterseite (Außenseite) der Wetterschutz-Schichtebene völlig ungeregelt oder über aufwendige Regelklappen, so daß die Temperatur im Hinterlüftungs-Zwischenraum entweder automatisch der Außentemperatur folgt oder daß komplizierte und optisch störende Klappen oder dergleichen erforderlich sind.

Die der vorliegenden Erfindung zugrunde liegende Aufgabe besteht somit darin, eine Einrichtung der gattungsgemäßen Art anzugeben, mit der eine definierte Konditionierung, d.h. Be- und Entlüftung beispielsweise von Hinterlüftungs-Zwischenräumen und dergleichen Innenraumzonen möglich ist und mit der problemlos auch eine geneigte und gegebenenfalls schallgedämmte Wetterschutz-Schichtebene verifiziert werden kann, ohne daß zu befürchten ist, daß Wasser und Lärm beziehungsweise Schall eindringen.

Die vorstehend definierte Aufgabe wird dem Kerngedanken der Erfindung entsprechend dadurch gelöst, daß die Profilpfosten so ausgebildet sind, daß zwischen der Innen- und Außenseite der Einzelplatten eine Luftzirkulation möglich ist.

Besondere Ausgestaltungen, Weiterbildungen und Verbesserungen im Hinblick auf die Ausbildung der Profilpfosten, insbesondere auch im Hinblick auf Zusatzmaßnahmen und Zusatzmittel sind Gegenstand der Unteransprüche. Dabei sind insbesondere auch Maßnahmen, die eine gezielte Wasserführung beziehungsweise Wasserableitung in oder an der Fassade mit anschließender Sammlung des Wassers zum Ziel haben offenbart.

Die Erfindung wird im folgenden anhand der Zeichnung näher erläutert. Diese zeigt in
- Fig. 1: eine Prinzipdarstellung eines Gebäudehüllen-Systems;
- Fig. 2: eine Schemadarstellung einer ersten Verbindung der Profilpfosten an einer Raumabschlußwand;
- Fig. 3: eine Schemadarstellung einer zweiten Verbindung der Profilpfosten an einer Raumabschlußwand;
- Fig. 4: ein erstes Ausführungsbeispiel der Profilpfosten;
- Fig. 5: ein zweites Ausführungsbeispiel der Profilpfosten;
- Fig. 6: ein drittes Ausführungsbeispiel der Profilpfosten;
- Fig. 7: ein viertes Ausführungsbeispiel der Profilpfosten;
- Fig. 8: ein fünftes Ausführungsbeispiel der Profilpfosten;
- Fig. 9: ein sechstes Ausführungsbeispiel der Profilpfosten;
- Fig. 10: ein siebtes Ausführungsbeispiel der Profilpfosten;
- Fig. 11: ein achtes Ausführungsbeispiel der Profilpfosten;
- Fig. 12: ein neuntes Ausführunsbeispiel der Profilpfosten;
- Fig. 13: ein zehntes Ausführungsbeispiel der Profilpfosten;
- Fig. 14: ein elftes Ausführungsbeispiel der Profilpfosten.

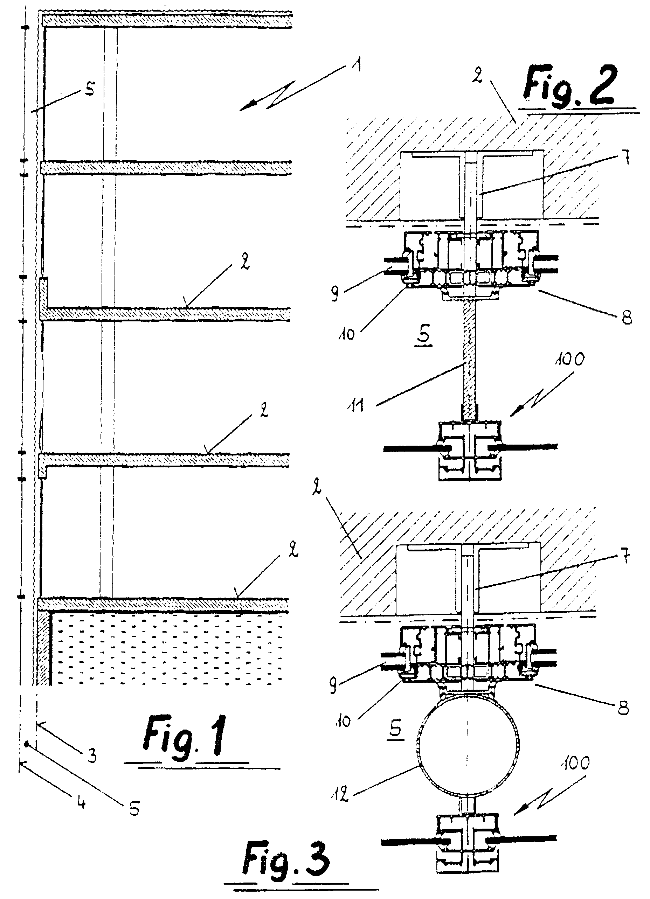

Zum Verständnis der Erfindung an sich ist in Fig. 1 eine Prinzipdarstellung eines Gebäudehüllen-Systems 1 dargestellt, dem eine Mehrzahl von Raum- beziehungsweise Geschoß-Decken 2 übereinander angeordnet sind. Diese Raum- beziehungsweise Geschoß-Decken 2 bilden mit der Raumabschlußwand 3, die wahlweise durch ein sogenanntes Festverglasungssystem oder auch durch öffenbare Fenstersysteme gebildet wird, ein geschlossenes Gebäudesystem.

Der Raumabschlußwand 3 kann nun im konstanten Abstand eine sogenannte Wetterschutz-Schichtebene 4 gegenüberliegen, die im Bereich der Raum- beziehungsweise Geschoß-Decken 2 verankert ist und so eine vorgesetzte zweite Gebäudefront bildet. Diese Wetterschutz-Schichtebene 4 besteht aus einer Vielzahl von neben- und/oder übereinander angeordneten Einzelplatten, insbesondere Glasscheiben. Zwischen dieser zweiten Gebäudefront (Wetterschutz-Schichtebene 4) und der ersten Gebäudefront (Raumabschlußwand 3) ergibt sich so ein Hinterlüftungs-Zwischenraum 5, in den von innen über zum Beispiel Fenster Innenraumluft einströmt und in den von der Außenseite des Gebäudes her über die genannten Luftschlitze beziehungsweise Luftdurchtrittsöffnungen oder dergleichen Luft einströmen und ausströmen kann, die wahlweise zusätzlich beheizt oder gekühlt werden kann. In diesem Hinterlüftungs-Zwischenraum 5 stellt sich so je nach Außen- und Gebäudeinnentemperatur eine bestimmte Temperatur ein.
Bei den bekannten Gebäudehüllen-Systemen 1 erfolgt der genannte Luftaustausch ungeregelt ohne Schalldämmung vom beziehungsweise zum Hinterlüftungs-Zwischenraum 5 über Abstandsschlitze, d.h. die Fugen zwischen den übereinander angeordneten Glasscheiben der Wetter-Schichtebene 4. Gemaß der vorliegenden Erfindung erfolgt der genannte Luftaustausch geregelt und schallgedämmt, und zwar über demensprechend konstruktiv gestaltete Profilpfosten zur Führung und Halterung der Glasscheiben der Wetterschutz-Schichtebene 4.

Unter Hinweis auf die in Fig. 2 und Fig. 3 gezeigten Schemadarstellungen soll zunächst die Zu- beziehungsweise Anordnung der Profitpfosten 100 erläutert werden. Fig. 2 und Fig. 3 zeigen - in der Ebene einer Raumbeziehungsweise Geschoß-Decke 2 nach Fig. 1 - je einen Befestigungsanker 7, über den zum Beispiel ein an sich bekanntes Festverglasungssystem 8 mit der Gebäudewand verankert ist; die Festverglasungssysteme 8 bilden die in Verbindung mit Fig. 1 genannte Raumabschlußwand 3 und weisen - wie in Fig. 2 und Fi.g 3 dargestellt - im allgemeinen eine sogenannte Doppelverglasung 9 auf. Diese Doppelverglasungen 9 sind dicht in Halteprofilen beziehungsweise Profilrahmen 10 eingesetzt und bilden so die bauphysikalische, funktionelle Schichtebene des Gebäudehüllen-Systems 1 nach Fig. 1. Der Vollständigkeit halber sei jedoch erwähnt, daß die erfindungsgemäßen Profilpfosten 100 auch unmittelbar, d.h. ohne Anordnung eines Festverglasungssystems 8 an den Befestigungsankern fixiert werden können und anstelle einer Einfachverglasung auch Isolierglasscheiben vorgesehen sein können.

Anhand von Fig. 2 und Fig. 3 soll nur gezeigt werden, daß die Profilpfosten 100 wahlweise über starre, steife Schotten 11 (Fig. 2) oder hohlzylindrische Schotten 12 (Fig. 3) an der Gebäudewand fixiert werden können. Die Breite beziehungsweise Tiefe dieser Schotten 11 beziehungsweise 12 bestimmt die Tiefe und damit das Volumen der Hinterlüftungs-Zwischenräume 5 und es soll hier darauf hingewiesen werden, daß die Schotten 11 beziehungsweise 12 in das - anhand der weiteren Figuren - noch zu beschreibende Belüftungssystem integriert werden können. Die starren Schotten 11 dienen der vertikalen Trennung von zum Beispiel Hinterlüftungs-Zwischenräumen 5 und sind so gezielt in eine Luftzirkulation integrierbar; und auch die hohlzylindrischen Trennwände 12, die anders als in Fig. 3 gezeigt auch als Rechteck-/Dreieck-Hohlprofil oder dergleichen ausgebildet sein können, sind, und dann in Form von Entlüftungskanälen, in einen Luftkreislauf integrierbar. In jedem Falle ist es so, daß die Schotten 11, 12 gezielt zur Zwangsführung der in den Hinterlüftungs-Zwischenräumen 5 strömenden Luft herangezogen werden können.

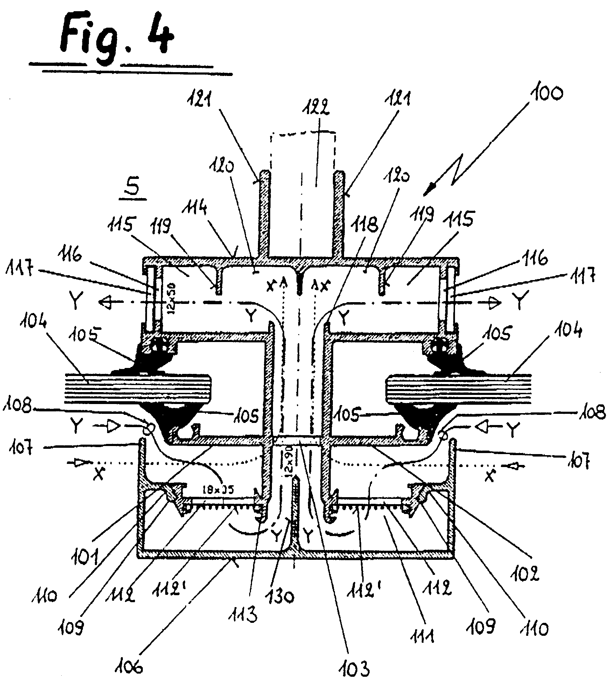

Die genannten Schotten 11 beziehungsweise 12 sind - konstruktiv beziehungsweise bautechnisch betrachtet - gebäudeseitig mit den Befestigungsankern 7 verbunden und an ihren freien Längsseiten in Führungsschlitzen (vergleiche 122 in Fig. 4 ... 8) der Profilpfosten 100 geführt und gehalten.

Die Profilpfosten 100 sind in den Fig. 4 .... 14 -und zwar in elf verschiedenen Ausführungsbeispielen - dargestellt.

Das Grundprinzip beziehungsweise Funktionsprinzip der Profilpfosten 100 soll im einzelnen zunächst anhand von Fig. 4 erläutert werden. Das Grundelement wird als Doppel-U bezeichnet, dessen einzelne U 101/102 fußseitig miteinander verbunden sind, und zwar so, daß über die Länge der Profilpfosten 100 betrachtet - eine Vielzahl von öffnungen, insbesondere Langlöcher, vorgesehen sind, die letztlich als erste Luftdurchtrittsöffnungen 103 fungieren. In die beiden offenen Seiten der U's 101/102 werden jeweils Glasscheiben 104 eingesetzt und über Verglasungsleisten 105 beidseitig an den offenen Schenkeln der U's 101/102 fixiert. Die Glasscheiben 104 können - je nach Gegebenheiten - als Einfachscheiben, aber auch als Isolierglasscheiben realisiert sein.

Gemäß dem (einfachsten) Funtionsprizip kann so - vergleiche die punktierte Luftströmung X - die Außenluft (von der Außenseite der Glasscheiben 104) durch die ersten Luftdurchtrittsöffnungen 103 in die Hinterlüftungs-Zwischenräume 5 und so an die Inneseite der Glasscheibe 104 strömen. Um die Hinterlüftungs-Zwischenräume 5 gegen Verunreinigungen zu schützen, sind die Luftdurchtrittsöffnungen 103 vorzugsweise mit zum Beispiel Fliegengittern abgedeckt und in besonderer Ausgestaltung der Luftdurchtrittsöffnungen 103 ist vorgesehen, diesen Schieberelemente zuzuordnen, über die der Gesamtquerschnitt für den Luftdurchtritt variierbar ist.

Bei dem in Fig. 4 dargestellten Ausführungsbeispiel ist der Außenseite des Doppel-U 101/102 eine Verblendung 106 vorgesetzt. Diese Verblendung 106 übergreift das Doppel-U 101/102 mit ersten Stegen 107, die zu den Glasscheiben 104 hin einen definierten Luftschtitz 108 von zum Beispiel 5 oder 6 mm bestimmen. Die Verbindung zwischen der Verblendung 106 und dem Doppel-U 101/102 ist als Clipsverbindung 109 realisiert, wobei an den ersten Stegen 107 nach innen abstehende Flanken 110 an komplementären, parallel zur Außenseite des Doppel-U 101/102 angeordneten Schienen 111 einrasten. In diesen Schienen 111 sind über die Länge der Profilpfosten 100 betrachtet zweite Luftdurchtrittsöffnungen 112 vorgesehen, über die durch den Luftschlitz 108 eintretende Luft zu den ersten Luftdurchtrittsöffnungen 103 und von hier zu den Hinterlüftungs-Zwischenräumen 5 strömen kann. Bezogen auf die Luftzirkulation sind die Strömungsquerschnitte der Luft (vergleiche Pfeil Y) vom Luftschlitz 108 zu den zweiten Luftdurchtrittsöffnungen 112 und von hier zu den aus Schalldämmgründen seitlich versetzt angeordneten ersten Luftdurchtrittsöffnungen 103 strömungstechnischen Grundsätzen zufolge aufeinander abgestimmt dimensioniert. Bei dem zuletzt erläuterten Ausführungsbeispiel ist der fliegengitterschutz 112' an den zweiten Luftdurchtrittsöffnungen 112 vorgesehen und es soll noch angemerke werden, daß an den Umlenkkanten des Luftstroms von zum Beispiel den zweiten Luftdurchtrittsöffnungen 112 zu den ersten Luftdurchtrittsöffnungen 103 sogenannte Abreißkanten 113 vorgesehen sind, um zum Beispiel der von der Außenseite zu den Hinterlüftungs-Zwischenräumen 5 strömenden Luft mitgeführte Feuchtigkeit zu entreißen.

Bezüglich der Innenseite der Verblendung 106 ist noch anzumerken, daß mittig ein den Luftstrom teilender Steg 130 vorgesehen ist, der einen Luftkurzschluß zwischen den Luftströmen an beiden Seiten des Profilpfostens 100 verhindert.

In weiterer Ausgestaltung der in Fig. 4 dargestellten Konstruktion ist der Innenseite des Doppel-U 101/102 eine Abdeckung 114 zugeordnet, die die durch die erste Luftdurchtrittsöffnung 103 zwischen den Fußpunkten des Doppel-U 101/102 strömende Luft umlenkt und zwar zu den Glasscheiben 104. Diese Abdeckung 114 bildet somit zusammen mit den Innenseiten des Doppel-U 101/102 einen Kanal 115, durch den die einströmende Luft in die Hinterlüftungs-Zwischenräume 5 gelangt. Diese Kanäle 115 enden mit der Innenseite des Doppel-U 101/102; am Ausgang der Kanäle 115 sind dritte Luftdurchtrittsöffnungen 116 vorgesehen, deren Querschnitte den längs der Luftzirkuzlation betrachtet vorhergehenden Luftdurchtrittsöffnungen 103/112 gegenüber vorzugsweise versetzt angeordnet sind und - wie bereits erwähnt - der Luftzirkulation entsprechend strömungstechnisch dimensioniert sind. Gemäß dem in Fig. 4 dargestellten Ausführungsbeispiel sind den dritten Luftdurchtrittsöffnungen 116 Schieberelemente 117 zugeordnet, über die die Luftströmung zu den Hinterlüftungs-Zwischenräumen 5 hin gezielt beeinflußt d.h. geregelt werden kann.

Der Vollständigkeit halber sei noch angemerkt, daß am übergang vom Kanal zwischen den Fußpunkten des Doppel-U 101/102 zum Kanal 115 ebenfalls Abreißkanten 118 vorgesehen sind. Darüberhinaus sind an der Innenseite der Abdeckung 114 drei Stege 119 vorgesehen, die - bei geneigter Anbringung der Profilpfosten 100 bzw. der Wetterschutz-Schicht-Ebene (4 in Fig. 1) - zwei Entwässerungskanäle 120 für etwaiges Kondenswasser bilden. An der Außenseitee der Abdeckung 114 sind mittig zwei Wangen 121 vorgesehen, die einen Führungsschlitz 122 zum Aufstecken auf die Schotten (11 bzw. 12 nach Fig. 2 bzw. 3) bilden.

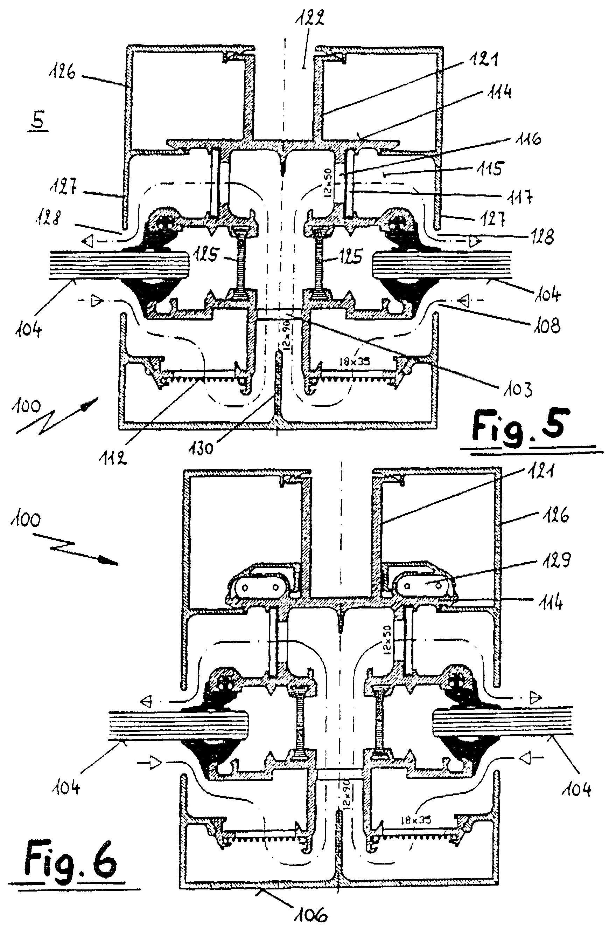

Ein zweites Ausführungsbeispeil der Profilpfosten 100 ist in Fig. 5 dargestellt. Die konstruktive Form dieses Profilpfostens 100 entspricht der nach Fig. 4, d.h. die Luftzirkulation (vgl. strichprunktierte Linie Y) erfolgt über den Luftschlitz 108 durch die zweiten Luftdurchtrittsöffnungen 112 zu den ersten Luftdurchtrittsöffnungen 103, zu dem zwischen den Fußpunkten des Doppel-U 101/102 gebildeten Kanal und schließlich zu dem zu den Hinterlüftungs-Zwischenräumen 5 hin durch die dritten Luftdurchtrittsöffnungen 116 mit den Schiebeelementen 117 offenen Kanal 115.

Die Besonderheit der in Fig. 5 dargestellten Profilpfosten 100 besteht einmal darin, daß die Innen- und Außenseite des Doppel-U 101/102 thermisch getrennt sind, und zwar über insbesondere glasfaserverstärkte Kunststoffleisten 125, die praktisch als Fußpunktverbindungen des Doppel-U 101/102 eingefügt sind. Eine weitere Besonderheit besteht darin, daß der Abdeckung 114 ein Paar von Innenblenden 126 zugeordnet ist, die an den Wangen 121 des Führungsschlitzes 122 eingehängt sind und je einen zur konjugierten Glasscheibe 104 hin gerichteten zweiten Steg 127 aufweisen. über diese zweiten Stege 127 wird ein innerer durchgehender Luftschlitz 128 gebildet und der Luftstrom selbst zur Innenseite der Glasscheibe 104 hin umgelenkt.

Ein drittes Ausführungsbeispiel der Profilpfosten 100 ist in Fig. 6 dargestellt. Die Grundkonstruktion entspricht der nach Fig. 4 und Fig. 5, mit der Besonderheit bzw. Weiterbildung dahingehend, daß im Freiraum zwischen den Innenblenden 126 und dem Zwickel zwischen den Wangen 121 des Führungsschlitzes 122 Heizbänder 129 eingelegt bsw. eingeclipst sind. Diese Heizbänder 129 sind an sich bekannte PTC-Heizelemente, die insoweit selbstregelnd sind, als bei einem Temperaturansteig der elektrische Widerstand des Heizelementes steigt und dementsprechend Stromaufnahme und Heizleistung sinken; bei Abkühlung kehrt sich dieser Prozeß um und die Heizleistung steigt. Mit diesen Heizbändern 129 kann so eine gezielte Wärmebeeinflussung der (vgl. strichpunktierte Linie Y) strömenden Luft erreicht werden; somit kann der Hinterlüftungs-Zwischenraum 5 , d.h. der Luftzwischenraum zwischen der Außenfassade (Wetterschutz-Schichtebene 4 in Fig. 1) und der Raumabschlußwand ( 3 in Fig. 1 ) gezielt beeinflußt werden. In der Praxis bedeutet dies, daß die Glasscheiben 104 der Außenfassade eisfrei und kondenswasserfrei, d.h. beschlagfrei, gehalten werden können. Damit ist es insbesondere auch möglich, die Lufttemperatur des Hinterlüftungszwischenraumes oberhalb der Frostgrenze zu halten.

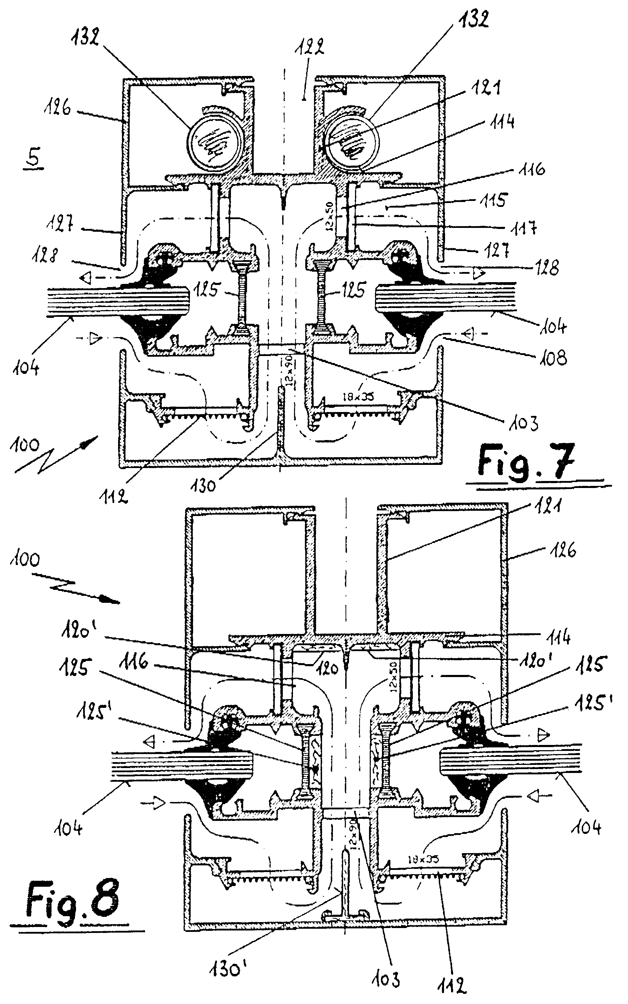

Ein viertes Ausführungsbeispiel der Profilposten 100 ist in Fig. 7 dargestellt. Die Grundkonstruktion entspricht der nach Fig. 4, 5 und 6, insbesondere der Fig. 6, mit der Besonderheit, daß im Freiraum zwischen den Innenblenden 126 und dem Zwickel zwischen den Wangen 121 der Fuhrungsschlitze 122 nunmehr Rohre 132 integriert sind. über diese Rohre 132, durch die ein Wärmeträgermedium wie zum Beispiel Wasser, ol, Gas, Druckluft fließen kann, ist die Möglichkeit gegeben, den Hinterlüftungs-Zwischenraum 5 gezielt thermisch zu beeinflußen. In Analogie zum dritten Ausführungsbeispiel gemäß Fig. 6 kann so eine gezielte "Zusatzheizung" realisiert werden; es ist aber auch möglich, den benachbarten Innenraum gezielt zu kühlen.

Ein fünftes Ausführungsbeispiel der Profilpfosten 100 ist in Fig. 8 dargestellt. Die Grundkonzeption entspricht der nach den Fig. 4 bis 7, wobei in Weiterbildung dieser Ausführungsbeispiele längs des Luftwegs an geeigneten Stellen schalldämmende Mittel angeordnet sind. Damit soll der durch den Versatz der Luftdurchtrittsöffnungen 103 / 112 / 116 bereits erreichte Effekt der Schalldämmung verbessert werden. Entsprechend dem in Fig. 8 dargestellten Ausführungsbeispiel sind die schalldämmenden Mittel längs des Luftwegs dadurch realisiert, daß der den Luftstrom teilende Steg 130 zum Beispiel als gesondertes Teil 130' aus schalldämmenden Material ausgebildet und in komplementäre Aufnahmeschienen an der Innenseite der Verblendung 126 eingeschoben ist. Zusätzlich hierzu kann auf die Kunststoffleisten 125 eine schalldämmende Schicht 125' aufgelegt werden. Auch kann der Grund der genannten Entwässerungskanäle 120 mit einer Schallschutzauflage 120' belegt werden. In besonderer Ausgestaltung der schalldämmenden Mittel ist vorgesehen, diese unterschiedlichen Schallfrequenzen entsprechend jeweils durch Materialien mit unterschiedlichen Schalldämmungseigenschaften zu realisieren.

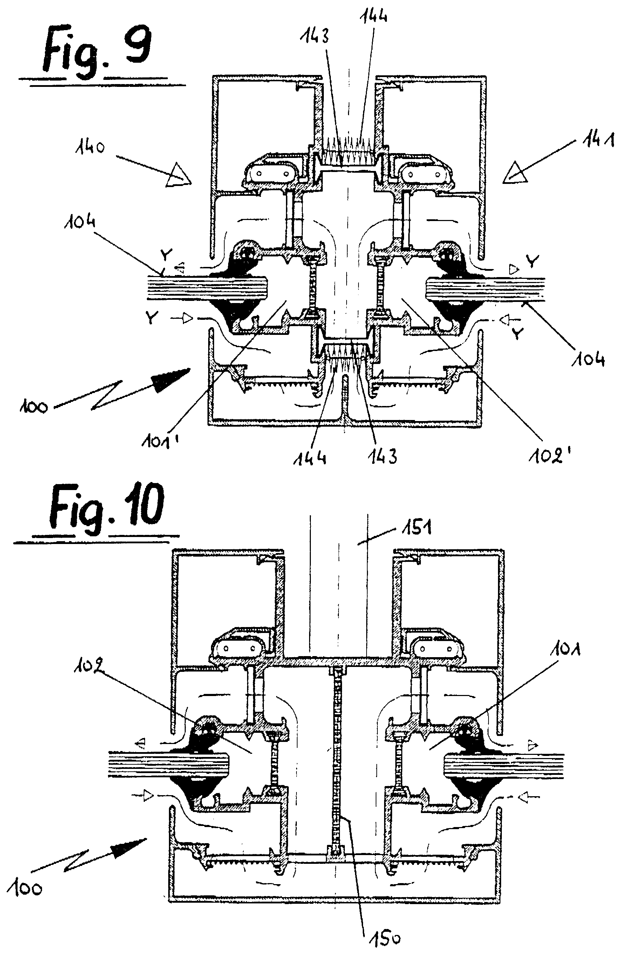

Ein sechstes Ausführungsbeispiel der Profilpfosten 100 in Fig. 9 dargestellt. Das Grundkonzept entspricht dem gemäß den Fig. 4 bis 8, insbesondere dem gemäß Fig. 6.

Die Besonderheit des in Fig. 9 dargestellten Profilpfostens 100 besteht darin, daß dieser nicht wie bei den vorhergehend beschriebenen Ausführungsbeispielen einstückig ausgebildet ist, sondern aus zwei komplementären Hälften 140/141 besteht beziehungsweise zusammengefügt ist. Die beiden diametral zueinander offenen U's 101'/102' mit den Glasscheiben 104 gemäß der Grundkonstruktion nach den Fig, 4 bis 8 sind also bei diesem sechsten Ausführungsbeispiel je für sich gefertigte Pfostenelemente, die somit in besonderer Weise für die Element-Bauweise geeignet sind.

Zur wechselseitigen Verbindung der beiden Pfosten-Hälften 140/141 sind in der Trennebene je zwei Führungen, insbesondere Schwalbenschwanzführungen 142, vorgesehen, die bei der Montage einer Wetterschutz-Schichtebene formschlüssig und zwar jeweils paarweise über eine entsprechend geformte Klammer, insbesondere eine Schwalbenschwanzklammer 143, miteinander verbunden werden. So entsteht letztlich wieder ein einstückiger Profilpfosten 100. Wie erwähnt sind die beiden Pfosten-Hälften 140/141 zunächst nur fomschlüssig miteinander verbunden; um eine kraftschlüssige Verbindung und maßgenaue Abstandshalterung der Pfosten-Hälften 140/141 zu erhalten, sind in Ergänzung und Zuordnung zu den Klammern 143 mindestens je eine Feder 144 oder dergleichen Spreizelement vorgesehen, die so dem Profilpfosten 100 als Montageeinheit die erforderliche Steifigkeit geben. Der Vollständigkeit halber sei noch angemerkt, daß die in der Luftströmung Y liegende Klammer 143 Lüftungsbohrungen und/oder Lüftungsschlitze aufweist.

Ein wesentliches Merkmal dieser Anordnung ist darin zu sehen, daß das Trägheitsmoment I_{X} (senkrecht zur Wand) voll erhalten bleibt und dem doppelten Betrag des Trägheitsmoments der Pfosten-Hälften 140/141 entspricht.

Ein siebtes Ausführungsbeispiel der Profilpfosten 100 ist in Fig. 10 dargestellt. Die Grundkonstruktion entspricht der nach den Fig. 4 bis 8; Bezug genommen wird insbesondere auf die dem Ausführungsbeispiel nach Fig. 8 zugrunde liegende Problemstellung.

Die Besonderheit des in Fig. 10 dargestellten Ausführungsbeispiels liegt darin, daß die zwischen den beiden U's 101/102 des Profilpfostens 100 verlaufende Luftführung mittels einer Trennwand 150, insbesondere einer Trennwand aus schalldämmenden Material oder mit schalldämmenden Auflagen geteilt wird. Diese Maßnahme empfiehlt sich insbesondere dann, wenn an die Innenseite des Profilpfostens 100 beispielsweise Raumtrennwände 151 oder dergleichen anschließen.

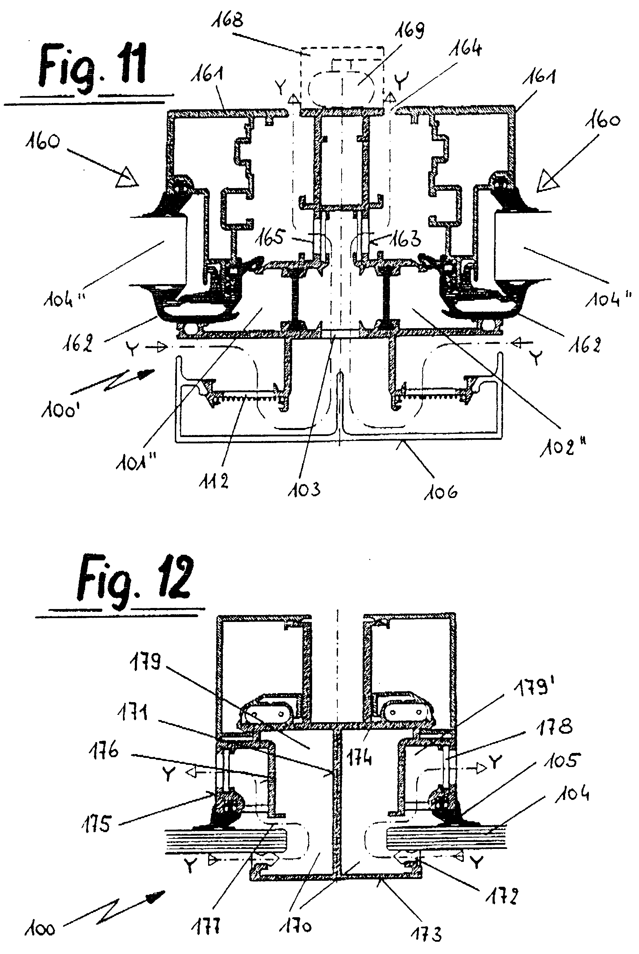

Ein achtes Ausführungsbeispiel eines Profilpfostens 100 zeigt Fig. 11. Grundsätzlich geht auch dieses Ausführungsbeispiel von der Konstruktion gemäß den Fig. 4 bis 10 aus, mit dem Unterschied, daß hier ein belüftetes beziehungsweise belüftbares Pfostenprofil 100' mit integriertem und öffenbaren Fensterflügel 160 dargestellt beziehungsweise konzipiert ist.

Die konstruktive Ausgestaltung des Profilpfostens 100' geht - analog zu den vorbeschriebenen Profilpfosten 100 - ebenfalls von einem Doppel-U 101''/102'' mit Luftdurchtrittssöffnungen 103 und einer vorgesetzten Verblendung 106 aus. Im Gegensatz zu den Ausführungsbeispielen nach Fig. 4 bis 10 sind die Glasscheiben 104'' jedoch nicht in den diametral zueinander offenen U's 101''/102'' eingesetzt, sondern in je einem eigenen Profil 161, das über entsprechende Dichtungen beziehungsweise Verglasungsleisten 162 formschlüssig am Profilpfosten 100' anlegbar ist.

Dieser Profilpfosten 100' selbst weist von der Innenseite des Doppel-U 101''/102'' ausgehende, senkrecht zur Außenseite, d.h. zur Fassadenebene, verlaufende Stege 163 auf, deren Länge der Breite der Profite 161 der Glasscheiben 104'' entspricht. Bei geschlossenem Fensterflügel 160 entsteht so eine bündige Innenseite, die nur von Lüftungsschlitzen 164 zwischen den Profilen 161 der Fensterflügel einerseits und den Stegen 163 der Profilpfosten 100' unterbrochen ist. Die Luftströmung Y verläuft so über die zweiten Luftdurchtrittsöffnungen 112 und die ersten Luftdurchtrittsöffnungen 103 in den Raum zwischen dem Doppel-U 101''/102'' und anschließend in den Zwischenraum zwischen den Stegen 163 und den Fensterflügeln 160 - und schließlich über die Lüftungsschlitze 164 in den Innenraum. Gemaß dem Ausführungsbeispiel nach Fig. 11 sind in Richtung Luftströmung Y betrachtet in den Stegen 163 neben dem Doppel-U 101''/102'' weitere Luftdurchtrittsöffnungen 165 mit gegebenenfalls Schieberelementen zur Variation des Luftquerschnitts vorgesehen, über die so zwischen den Stegen 163 und dem Fensterflügel 160 ein längerer Strömungsweg entsteht. (Der Fensterflügel kann natürlich auch als sogenannter übergreifender Fensterflügel ausgebildet sein, wobei dann verdeckte Lüftungsschlitze entstehen).

Dem anhand von Fig. 11 erläuterten Ausführungsbeispiel liegt primär die gleiche Grundaufgabe zugrunde wie den anhand von Fig. 4 bis 10 dargestellten Profilpfosten, d.h. es geht zunächst um eine dosierte Zuführung eines Luftstroms über ein spezifisch konzipiertes beziehungsweise konstruiertes Pfostenprofil. Mit dem der Fig. 11 zugrunde liegenden Konzept, Teilbereiche beziehungsweise Felder der Wetterschutz-Schichtebene so zu gestalten, daß sie zu Reinigungszwecken oder dergleichen zu öffnen sind, wird letztlich neben einem dosierten permanenten Luftstrom erreicht, daß dem Aufschaukeln von Luftfeuchtigkeit infolge zu dichter Fenster entgegengewirkt wird und daß gegebenenfalls eine gezielte Sauerstoffversorgung des Innenraums ermöglicht wird. Bezüglich der konstruktiven Ausgestaltung soll insbesondere darauf hingewiesen werden, daß die Luftführung über den Luftspalt am Fensterflügel 160, d.h. indirekt und unsichtbar im Raum erfolgt. In Verbindung mit dem Ausführungsbeispiel gemäß Fig. 11 ist es auch denkbar - wie in der Zeichnung gestrichelt angedeutet - auf der bündig mit der Oberseite der Profile abschließenden Seite des Profilpfosten 100' eine Einheit 168 mit zum Beispiel Heizbändern 169 der anhand von Fig. 6 erläuterten Art zwecks Beeinflussung der Innenraumzone anzuordnen. Die Luft kann im Zwischenraum zwischen dem Fensterflügel-Profil und dem Profilpfosten auch an in das Gesamtsystem integrierten Heizungsrohren des ohnehin vorhandenen Heizungssystems vorbeigeführt werden.

Ein neuntes Ausführungsbeispiel eines Profilpfostens 100 zeigt Fig. 12. Die Grundkonstruktion entspricht der gemäß den Ausführungsbeispielen nach Fig. 4 bis 10, wobei im Unterschied hierzu eine Konstruktionsvereinfachung dahingehend erfolgt, daß die Verblendung (106 in Fig. 4 bis 8) der vorbeschriebenen Profilpfosten 100 einstückig mit diesem ausgebildet ist beziehungsweise als separates Element entfällt. Die Grundkonstruktion des Ausführungsbeispiel nach Fig. 12 besteht aus einem Doppel-U-förmigen Profil 170, bei dem die U's eine gemeinsame Grundebene 171 aufweisen. Die Glasscheiben 104 liegen dabei einerseits an einer Glasdichtung 172 an, die an der Innenseite der die Außenfassade bildenden Schenkel 173 des Doppel-U-Profils 170 anliegt und längs ihrer Erstreckung Unterbrechungen zum Lufteintritt beziehungsweise Luftdurchtritt aufweist. Von der zweiten Seite her sind die Glasscheiben 104 von einer normalen Glasdichtung 105 gehalten, die ihrerseits vom zweiten Schenkel 174 des Doppel-U-Profils 170 her mittels einer Abdeckung 175 gehalten wird. Parallel zu dieser Abdeckung 175 liegt eine Trennwand 176. Die Luftströmung Y dieses Profilpfostens 100 ist so, daß die Luft unmittelbar an der Außenseite der Glasscheibe 104 durch die Unterbrechungen der Glasdichtung 172 ins Innere des Profils 102' eintritt und durch einen Spalt 177 zwischen der Glasscheibe 104 und der Trennwand 176 und einem gegebenenfalls mit Schiebeelementen ausgebildeten Luftdurchlaß 178 in der Abdeckung 175 zur Innenraumzone gelangt.

Ein besonderes Funktionsmerkmal des Ausführungsbeispiels nach Fig. 12 ist darin zu sehen, daß mit der Luft eindringendes Wasser in der durch die Trennwand 176 und die Grundebene 171 gebildeten Wirbelkammer 179 abgeschieden wird und auch gezielt nach unten entwässert werden kann. (Eine weitere Wirbelkammer 179' bildet sich im Raum zwischen der Abdeckung 175 und der Trennwand 176). Insgesamt betrachtet zeichnet sich das Ausführungsbeispiel nach Fig. 12 noch dadurch aus, daß die Gesamtkonstruktion aufgrund der sehr flachen äußeren Abdeckung relativ niedrig bauend ist.

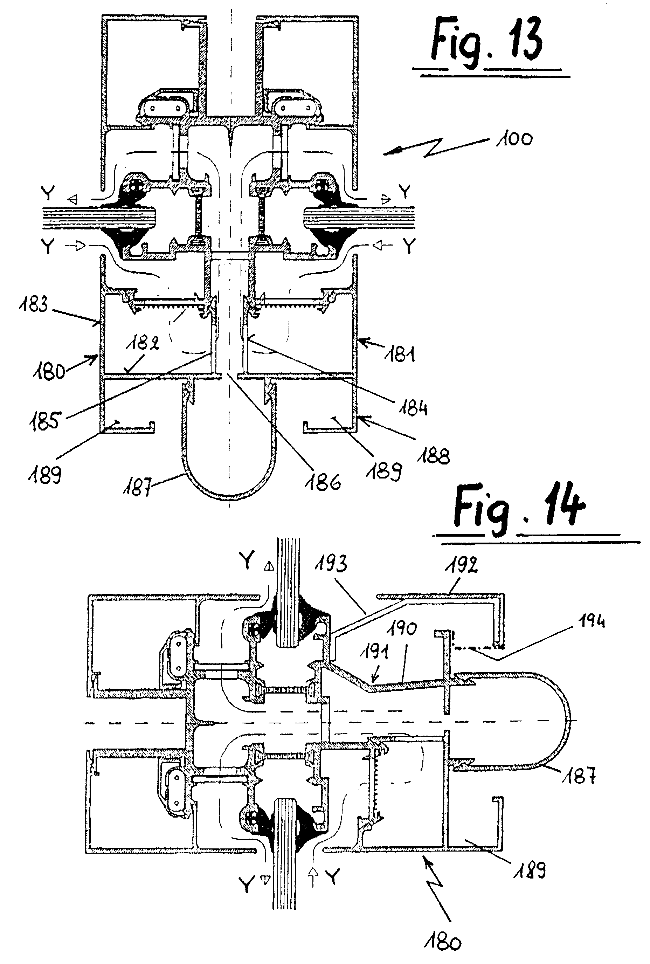

In den Fig. 13 und 14 sind zwei weitere Ausführungsbeispiel für Profilpfosten 100 dargestellt. Der Hintergrund dieser Weiterbildungen der Profilpfosten 100 nach den Ausführungsbeispielen gemäß Fig. 4 bis 12 liegt darin, daß zusätzlich zur Luftführung in der mehrschichtigen Außenfassade beziehungsweise zur damit verbundenen Konditionierung von Innenraumzonen auch eine gezielte Wasserführung in oder an der Fassade erreicht werden soll. Diese Wasserführung soll auch zu einer Sammlung des Wassers führen und zwar letztlich mit dem Ziel, daß gesammelte Wasser in den Versorgungskreislauf des Gebäudes zu integrieren um den Wasserverbrauch zu senken und die öffentliche Entsorgung zu entlasten.

Fig. 13 zeigt ein zehntes Auführungsbeispiel eines Profilpfostens 100, das in der Grundkonstruktion dem Ausführungsbeispiel gemäß Fig. 6 entspricht. Im Unterschied zu Fig. 6 ist jedoch die Verblendung 106 nicht einteilig, sondern zweiteilig ausgebildet. Die beiden Hälften 180, 181 der Verblendung weisen je einen rechteckigen Querschnitt auf, wobei die den Profilpfosten 100 begrenzenden Außenseiten 182/183 geschlossene Flächen sind. Die beiden anderen Seiten sind relativ zueinander und zum eigentlichen Profilpfosten 100 so gestaltet, daß die Hälften 180, 181 der Verblendung am Profilpfosten 100 eingeklipst werden können. Die sich parallel gegenüberliegenden Innenseiten 184 der Verblendungs-Hälften 180/181 weisen Lüftungsschlitze 185 für den Luftstrom Y auf. Die durch die Zweiteiligkeit der Verblendung entstehende Trennfuge 186 wird mit einer an den Außenfassadenseiten 182 der Verblendungs-Hälften 180/181 einklipsbaren Leiste 187, zum Beispiel - wie dargestellt - halbrunden Profils abgedeckt. Damit ergibt sich die Möglichkeit die Verblendung in Elementbauweise auszuführen und zum Beispiel den Kreuzungspunkt der Leiste 187 als Formgußstück auszubilden.

In weiterer Ausgestaltung und Verbesserung dieses zehnten Ausführungsbeispiels ist vorgesehen, an den Außenfassadenseiten der Verblendungs-Hälften 180/181 je einen rechtwinklingen Ansatz 188 auszubilden. Damit entstehen außenliegende Wirbelkammern (Wasserkanäle) 189 zur gezielten Wasserführung.

Fig. 14 zeigt ein elftes Ausführungsbeispiel eines Profilpfostens 100 als Horizontalelement. Der Profilpfosten nach Fig. 14 entspricht dem nach Fig. 13, wobei - entsprechend der Verwendung als Horizontalteil - nur eine Verblendungs-Hälfte 180 analog der konstruktiven Ausgestaltung nach Fig. 13 mit einer Wirbelkammer 189 vorgesehen ist. Diese Verblendungs-Hälfte 180 dient bezogen auf die Montage in einer Wetterschutz-Schichtebene als unteres Teil beziehungsweise untere Wasserführung.

Die zweite, d.h. obere Verblendungs-Hälfte ist hier durch einen vom eigentlichen Profilpfostens 100 abstehenden geknickten Steg 190 gebildet, an dessen Ende dann die Leiste 187 eingeklipst. Dieser Steg 190 ist zur Unterseite, d.h. zur Verblendungs-Hälfte 180 hin eingeknickt - knickstelle 191 - und dient ebenfalls als Entwässerungskanal und zwar als horizontaler Entwasserungskanal. Das in der unteren Verblendungs-Hälfte 180 und im Entwässerungskanal des Stegs 190 fließende Wasser wird so seitlich zu vertikalen Kanälen abgeführt.

Der Steg 190 mit dem Entwässerungskanal wird mittels einer Abdeckleiste 192 abgedeckt, die von am Profilpfosten 100 fixierten Haltestäben 193 gehalten wird. Die Abdeckleiste 192 kann über - strichpunktiert angedeutete - komplementäre Rasemittel 194 auch am Steg 190 eingeklipst werden.

Abschließend sei noch auf folgende Möglichkeit hingewiesen. In der Außenfassade können auch Photovoltaik-Elemente integriert werden, mit denen - je nach Präferenzen und/oder Vorgaben - beispielsweise der Hinterlüftungs-Zwischenraum 5 beheizt werden kann; dies ist insbesondere in Verbindung mit öffenbaren Fenstersystemen von besonderer Bedeutung. Die in den Photovoitaik-Elementen generierte elektrische Leistung kann in Weiterbildung beispielsweise auch zur Regelung, d.h. Ansteuerung der in Verbindung mit den Luftdurchtrittsöffnungen erwähnten Schieberelemente und damit zur Regelung des Luftdurchtrittsquerschnitts verwandt werden; darüberhinaus ist es auch möglich, über die in den Photovoltaik-Elementen erzeugte Leistung einen im Hinterlüftungs-Zwischenraum 5 angebrachten Sonnenschutz, z.B. eine Sonnenjaiousie, zu steuern.

Bezüglich des Luftwegs durch die Profilpfosten 100 soll noch auf folgende Weiterbildungsmöglichkeit hingewiesen werden. Um im Falle eines starken Wassereinbruchs ein "Absaufen" der Hinterlüftungs-Zwischenräume zu verhindern kann an geeigneten Stellen ein bei Feuchtigkeit aufquellendes Mittel integriert werden. Damit wird der Luftweg gegebenenfalls automatisch gegen Wasserdurchtritt verschlossen.

Und bezüglich der Steuerung der Schieberelemente ist es denkbar, diese mit Steuerstiften aus Memory-Metall zu versehen. So kann in Abhängigheit von vorgegebenen Grenztemperaturen eine automatische Betatigung der Schieberlemente verifiziert werden.

## Patentansprüche

1. Einrichtung zur Konditionierung von Innenraumzonen, insbesondere zur Be- und Entlüftung von Innenraumzonen, insbesondere zur Anwendung bei zwischen einer Raumabschlußwand eines Wand- und/oder Dachbereichs eines Gebäudes und
einer im Abstand und parallel dazu aus Einzelplatten, insbesondere Glasscheiben, zusammengesetzten Wetterschutz-Schichtebene
verbleibenden Hinterlüftungs-Zwischenräumen,
wobei die Einzelplatten über an der Raumabschlußwand fixierte Profilpfosten aneinander gefügt sind,
dadurch gekennzeichnet,
daß die Profilpfosten (100) so ausgebildet sind, daß zwischen der Innen- und Außenseite der Einzelplatten (Glasscheiben 104) eine insbesondere steuerbare Luftzirkulation (Pfeile X, Y) möglich ist.
(Fig. 4, 5, 6)

2. Einrichtung nach Anspruch 1,
dadurch gekennzeichnet,
daß die Profilpfosten (100) die Form eines fußseitig sich im Abstand gegenüberliegenden und hier miteinander verbundenen Doppel-U (101, 102) aufweisen, wobei die Einzelplatten (104) jeweils von der offenen Seite der U's (101, 102) her eingesetzt sind, und
wobei die Luftzirkulation längs der Außenseiten der U's (101, 102) über in Verbindungsstegen zwischen den U's vorgesehene erste Luftdurchtrittsöffnungen (103) erfolgt.
(Fig. 4, 5, 6)

3. Einrichtung nach Anspruch 2,
dadurch gekennzeichnet,
daß an der Außenseite der Profilpfosten (100) eine das Doppel-U (101, 102) übergreifende Verblendung (106) vorgesehen ist, die
- an der Außenseite des Doppel-U (101, 102) eingeklipst (109) ist, und
- einen zur Glasscheibe (104) hin orientierten ersten Steg (107) zur Realisierung eines definierten äußeren Luftspalts (108) aufweist, und
daß im Übergangsbereich zwischen den Außenseiten der U's (101, 102) und der Verblendung (106) vorzugsweise den ersten Luftdurchtrittsöffnungen (103) gegenüber versetzt angeordnete zweite (äußere) Luftdurchtrittsöffnungen (112) vorgesehen sind.
(Fig. 4, 5, 6)

4. Einrichtung nach Anspruch 3,
dadurch gekennzeichnet,
daß mittig an der Innenseite der Verblendung (106) ein den Luftstrom teilender Steg (130) vorsteht.
(Fig. 4, 5, 6)

5. Einrichtung nach einem der Ansprüche 2 bis 4,
dadurch gekennzeichnet,
daß an der Innenseite der Profilpfosten (100) über die Breite des Doppel-U (101, 102) eine Abdeckung (114) vorgesehen ist, die
- außenseitig einen Führungsschlitz (122) zur Montage an der Raumabschlußwand (3) und/oder an Verbindungsschotten (11, 12) aufweist, und
- gemeinsam mit der Innenseite der Profilpfosten (100) und den Innenblenden (126) einen Luftkanal (115) bildet, wobei der Luftaustritt zum Hinterlüftungs-Zwischenraum (5) durch dritte (innere) Luftdurchtrittsöffnungen (116) erfolgt.
(Fig. 4, 5, 6)

6. Einrichtung nach einem der Ansprüche 3 bis 5,
dadurch gekennzeichnet,
daß die Querschnitte der vorzugsweise gegeneinander versetzten Luftdurchtrittsöffnungen (103, 112, 116) in Richtung der Luftzirkulation (Pfeil Y) von außen nach innen aufeinander abgestimmt dimensioniert sind.

7. Einrichtung nach Anspruch 5 oder 6,
zur Verwendung bei geneigten Wetterschutz-Schichtebenen
dadurch gekennzeichnet,
daß die Innenseite der Abdeckung (114) Stege (119) zur Bildung von Entwässerungskanälen (120) aufweist.
(Fig. 4, 5, 6)

8. Einrichtung nach einem der Ansprüche 2 bis 7,
dadurch gekennzeichnet,
daß die Profilpfosten (100) im Bereich der fußseitigen Verbindung des Doppel-U (101, 102) Kunststoffleisten (125) zur thermischen Entkopplung aufweisen.
(Fig. 5)

9. Einrichtung nach einem der Ansprüche 5 bis 8,
dadurch gekennzeichnet,
daß der Abdeckung (114) an der Innenseite der Profilpfosten (100) Innenblenden (126) zugeordnet sind, die am Führungsschlitz (122) und an der freien Kante der Abdeckung (114) eingeklipst sind und einen zu den Einzelplatten (104) hin orientierten zweiten Steg (127) aufweist, der einen definierten inneren Luftspalt (128) bildet.
(Fig. 5, 6)

10. Einrichtung nach einem der Ansprüche 5 bis 9,
dadurch gekennzeichnet,
daß im Eckbereich zwischen den Außenwänden des Führungsschlitzes (122) einerseits und der Abdeckung (114) andererseits insbesondere selbstregelnde Heizbänder (129) fixiert sind.
(Fig. 6)

11. Einrichtung nach einem der Ansprüche 5 bis 9,
dadurch gekennzeichnet,
daß im Eckbereich zwischen den Außenwänden des Führungsschlitzes (122) einerseits und der Abedckung (114) andererseits Rohre (132) zur Durchleitung flüssiger oder gasförmiger Wärmeträgermediums vorgesehen sind.
(Fig. 7)

12. Einrichtung nach einem der Ansprüche 5 bis 11,
dadurch gekennzeichnet,
daß im Bereich des zur Abdeckung (114) hin führenden Luftkanals Abreißkanten (118) vorgesehen sind.
(Fig. 4, 5 ,6)

13. Einrichtung nach einem der Ansprüche 3 bis 12,
dadurch gekennzeichnet,
daß die (äußeren) Lufteintrittsöffnungen (103, 112) mit beispielsweise Fliegengittern (112') als Schutz gegen Verunreinigungen abgedeckt sind.
(Fig. 4, 5, 6)

14. Einrichtung nach einem der Ansprüche 5 bis 13,
dadurch gekennzeichnet,
daß die inneren Luftdurchtrittsöffnungen (vergleiche 116) bezüglich des Durchtrittsquerschnitts variierbar sind.
(Fig. 4, 5, 6)

15. Einrichtung nach Anspruch 14,
dadurch gekennzeichnet,
daß zur Variation der Durchtrittsquerschnitte Schieberelemente (117) vorgesehen sind.
(Fig. 4, 5, 6)

16. Einrichtung nach einem der Ansprüche 1 bis 15,
dadurch gekennzeichnet,
daß die Profilpfosten (100) aus zwei über Führungs- und Halteelemente verbundene komplementäre Hälften (140 , 141) bestehen (Fig. 9).

17. Einrichtung nach Anspruch 16,
dadurch gekennzeichnet,
daß die Führungs- und Halteelemente Schwalbenschwanzklammern (143) sind (Fig. 9).

18. Einrichtung nach Anspruch 17,
dadurch gekennzeichnet,
daß den Schwalbenschwanzklammern (143) je ein Spreizelement, insbesondere eine Feder (144) zugeordnet ist (Fig. 9).

19. Einrichtung nach einem der Ansprüche 1 bis 18,
dadurch gekennzeichnet,
daß der Luftkanal im Innenbereich der Profilpfosten (100) durch eine Trennwand (150) geteilt ist (Fig. 10).

20. Einrichtung nach einem der Ansprüche 1 bis 19,
zur Verwendung mit öffenbaren Fensterflügeln (160),
dadurch gekennzeichnet,
daß die Einzelplatten (Glasscheiben 104'') in Profilen (161) gehalten und mit diesen an den Profilpfosten (100') dicht anlegbar sind, und
daß zwischen den Profilen (161) und den Profitpfosten (100') ein Luftweg realisiert ist, der zur Innenraumzone hin als Lüftungsschlitz (164) ausgebildet ist (Fig. 11).

21. Einrichtung nach Anspruch 20,
dadurch gekennzeichnet,
daß an der Innenseite des Profilpfostens (100') eine Einheit (168) zur Beeinflußung der Bedingungen in der Innnenraumzone, insbesondere der Temperatur-Bedingungen, vorgesehen ist (Fig. 11).

22. Einrichtung nach einem der Ansprüche 1 bis 15,
dadurch gekennzeichnet,
daß die Profilpfosten (102') die Form eines über eine gemeinsame Grundplatte (171) verbundenen Doppel-U-förmigen Profils (170) haben, und
daß die Einzelplatten (Glasscheiben 104) über eine Glasdichtung (172) mit Unterbrechungen an der Innenseite des äußeren U-Schenkels (173) anliegen und an der zweiten Fläche von einer vom zweiten U-Schenkel (174) abstehenden Abdeckung (175) mit einer Glasdichtung (105) gehalten sind (Fig. 12).

23. Einrichtung nach Anspruch 22,
dadurch gekennzeichnet,
daß parallel zur Abdeckung (175) eine vom zweiten U-Schenkel (174) abstehende Trennwand (176) vorgesehen ist, über die eine gezielte Umlenkung der Luftströmung (Y) realisiert ist (Fig. 12).

24. Einrichtung nach einem der Ansprüche 3 bis 15,
dadurch gekennzeichnet,
daß die Verblendung aus zwei komplementären Verblendungs-Hälften (180 , 181) besteht,
daß die Verblendungs-Hälften (180, 181) je für sich am Profilpfosten (100) eingeklipst sind, und
daß die Trennfuge (186) zwischen den Verblendungs-Hälften (180, 181) mittels einer Leiste (187) überdeckt ist (Fig. 13).

25. Einrichtung nach Anspruch 24,
dadurch gekennzeichnet,
daß zur Realisierung von Wasserkanälen (189) an der Außenseite der Verblendungs-Hälften (180, 181) je ein rechtwinkliger Ansatz (188) vorgesehen ist (Fig. 13).

26. Einrichtung nach Anspruch 24 oder 25,
zur Anwendung bei einem Horizontalteil,
dadurch gekennzeichnet,
daß die bezogen auf die Montageanordnung obere Verblendungs-Hälfte durch einen Steg (190) ersetzt ist, der eine Einknickung (191) aufweist und mittels einer Abdeckleiste abgedeckt ist.

27. Einrichtung nach einem der Ansprüche 1 bis 26,
dadurch gekennzeichnet,
daß in den Einzelplatten (Glasscheiben 104) Photovoltaik-Elemente integriert sind.

28. Einrichtung nach Anspruch 27,
dadurch gekennzeichnet,
daß die in den Einzelplatten (Glasscheiben 104) integrierten Photovoltaik-Elemente zur Beheizung des Hinterlüftungs-Zwischenraums (4) und/oder zur Steuerung der Schieberelemente (117) zur Einstellung der Durchtrittsquerschnitte und/oder zur Steuerung einer Sonnenschutzeinrichtung verwendet werden.

29. Einrichtung nach einem der Ansprüche 1 bis 28,
dadurch gekennzeichnet,
daß die Profilpfosten (100) über steife Schotten (11) mit der Raumabschlußwand (3) verbunden sind (vergleiche Fig. 2).

30. Einrichtung nach einem der Ansprüche 1 bis 28,
dadurch gekennzeichnet,
daß die Profilpfosten (100) über insbesondere in das Belüftungssystem integrierte hohlzylindrische Schotten (12) mit der Raumabschlußwand (3) verbunden sind (vergleiche Fig. 3).

31. Einrichtung nach einem der Ansprüche 1 bis 30,
dadurch gekennzeichnet,
daß die Raumabschlußwand (3) ein Festverglasungssystem (8) aufweist, und
daß die Wetterschutz-Schichtebene (4) an diesem Festverglasungssystem (8) fixiert ist.
(Fig. 2, 3)

32. Einrichtung nach Anspruch 31,
dadurch gekennzeichnet,
daß die Glasscheiben (104) der Wetterschutz-Schichtebene (4) Isolierglasscheiben sind.

33. Einrichtung nach einem der Ansprüche 1 bis 32,
dadurch gekennzeichnet,
daß längs des Luftwegs, beispielsweise im Innenbereich der Abdeckung (120') und/oder in Verbindung mit den Kunststoffleisten (125') und/oder im Bereich des den Luftstrom teilenden Stegs (130') schalldämmende Mittel vorgesehen sind.
(Fig. 8)

34. Einrichtung nach Anspruch 33,
dadurch gekennzeichnet,
daß die längs des Luftwegs vorgesehenen schalldämmenden Mittel verschiedenen Frequenzbereichen entsprechend durch unterschiedliche Dämmaterialien verifiziert sind.

35. Einrichtung nach einem der Ansprüche 1 bis 34,
dadurch gekennzeichnet,
daß an den Profilpfosten (100) im Bereich des Luftweges aufquellende Mittel vorgesehen sind, die im Falle eines Wassereinbruchs den Luftweg selbsttätig verschließen.

36. Einrichtung nach einem der Ansprüche 15 bis 35,
dadurch gekennzeichnet,
daß zur Betätigung der Schieberelemente (117) Steuerseifte aus Memory-Metall oder dergleichen vorgesehen sind.
